## Europäisches Patentamt
## European Patent Office
## Office européen des brevets

(19)

(11) Veröffentlichungsnummer: **0 126 464**
**B1**

(12)

# EUROPÄISCHE PATENTSCHRIFT

(45) Veröffentlichungstag der Patentschrift:
**07.12.88**

(21) Anmeldenummer: **84105708.6**

(22) Anmeldetag: **18.05.84**

(51) Int. Cl.⁴: **F 02 B 29/04**, F 02 B 37/00

(54) Verfahren zur Zufuhr von Brennluft in den Brennraum von Verbrennungskraftmaschinen.

(30) Priorität: **18.05.83 DE 3318161**

(43) Veröffentlichungstag der Anmeldung:
**28.11.84 Patentblatt 84/48**

(45) Bekanntmachung des Hinweises auf die Patenterteilung:
**07.12.88 Patentblatt 88/49**

(84) Benannte Vertragsstaaten:
**DE FR GB IT SE**

(56) Entgegenhaltungen:
**BE-A- 413 171**
**FR-A- 1 397 178**
**FR-A- 2 461 809**
**GB-A- 225 527**
**GB-A- 1 024 846**
**GB-A- 1 093 430**
**US-A- 2 391 163**

(73) Patentinhaber: **Schatz, Oskar, Dr.-Ing.,**
**Waldpromenade 16, D-8035 Gauting (DE)**

(72) Erfinder: **Schatz, Oskar, Dr.-Ing., Waldpromenade 16,**
**D-8035 Gauting (DE)**

(74) Vertreter: **Lamprecht, Helmut, Dipl.-Ing.,**
**Corneliusstrasse 42, D-8000 München 5 (DE)**

**Beschreibung**

Die Erfindung betrifft ein Verfahren zur Zufuhr von Ladeluft in den Brennraum einer Verbrennungskraftmaschine der Verdrängerbauart, insbesondere eines Hubkolbenmotors, mit Vorverdichtung der Ladeluft durch einen Verdrängerlader mit mindestens einem Laderkolben vor dem Schliessen der Einlassöffnung des Motorbrennraums, wobei die Ladeluft nach der Vorverdichtung so weit entspannt wird, dass sich im Motorbrennraum bei Beginn des Verdichtungshub durch den Motorkolben höchstens etwa Umgebungsdruck einstellt, wobei die Ladeluft vor dieser Entspannung durch eine Kühlvorrichtung gekühlt wird, wobei ferner die Ausschubbewegung des Kolbens bzw. der Kolben des Verdrängerladers mit der Kolbenbewegung der zu versorgenden Motorbrennräume derart synchronisiert ist, dass die aus dem Lader verdrängte Luft direkt in den betroffenen Motorbrennraum überströmt.

Ein Verfahren dieser Art ist aus der GB-A-225 527 und der BE-A-413 171 bekannt. Der Ladekolben und der Motorkolben sind mit einer gemeinsamen Kurbelwelle verbunden und dadurch in ihrer Bewegung zwangsweise synchronisiert.

Der Kraftstoffverbrauch und die Abgasemissionen üblicher Fahrzeugmotoren, insbesondere der Saugmotoren, ist zu hoch und ein Grossteil der verbrauchten Energie geht ungenutzt ins Freie. Beim Ottomotor wird im Teillastgebiet durch die Drosselung der Ansaugluft zusätzliche Energie verloren. Entwicklungen zur Leistungsregelung durch Veränderung der Lufteinlasszeiten während des Saughubs sind zu aufwendig und bisher an den Kosten gescheitert. Die Aufladung führt wegen des erhöhten Ladedrucks zu einer stärkeren mechanischen Beanspruchung des Motors, der deshalb eine dieser erhöhten Beanspruchung gewachsene, verstärkte Konstruktion erfordert, welche mit entsprechend höheren Kosten verbunden ist.

Entspannt man die Ladeluft nach der Verdichtung unter Arbeitsabgabe, so dass sich bei Beginn der Verdichtung durch den Motorkolben etwa Umgebungsdruck einstellt und kühlt man die Ladeluft vor der Entspannung durch einen Wärmetauscher, so kann bei Ottomotoren bei gleichzeitiger Verbesserung des Kraftstoffverbrauchs und der Abgasemissionen eine Leistungssteigerung erreicht werden, ohne den Ladedruck zu erhöhen, so dass die normale, unverstärkte Ausführung von Saugmotoren einsetzbar ist.

Durch die direkte Ladung eines bestimmten Motorzylinders durch einen zugeordneten Kolbenhub eines Verdrängerladers lässt sich der Antriebslauf des Laders gegebenenfalls auf ein Fünftel reduzieren.

Die Senkung des Verbrauchs und der Schadstoffemissionen, insbesondere NOX, ist ein aktuelles Problem bei der Herstellung von Kraftfahrzeugmotoren. Dabei ist zu berücksichtigen, dass unterschiedliche Betriebszustände unterschiedliche, zum Teil gegenläufige Massnahmen erfordern. Beispielsweise sind bei Kaltstart und Stadtverkehr die optimalen Verbrauchs- und Emissionswerte wegen Wärmemangel nicht zu erreichen, während bei Vollast Wärmeüberschuss störend wirkt.

Die weitere Verbreitung von Verbrennungsmotoren, welche mit Ladern ausgestattet sind, die wegen der Senkung der Abgasemissionen und des Kraftstoffverbrauchs wünschenswert sind, kann dadurch gefördert werden, dass die Kosten für derartige Motoren gesenkt und die Anpassung der Laderfunktion an den jeweiligen Betriebszustand des Motors erleichtert wird.

Der Erfindung liegt deshalb die Aufgabe zugrunde, das eingangs genannte Verfahren so auszugestalten, dass der Entspannungsbeginn der Ladeluft im Motorzylinder und/oder die Menge der Ladeluft auf einfache Weise verändert werden kann. Ausserdem sollen für die Durchführung des Verfahrens geeignete Verbrennungsmotoren geschaffen werden.

Die Lösung dieser Aufgabe besteht bei dem eingangs genannten Verfahren darin, dass die Festlegung des Entspannungsbeginns bei geöffneter Einlassöffnung durch die Veränderung der Phasenlage zwischen der Bewegung des Motorkolbens und des Laderkolbens bewirkt wird.

Die Erfindung macht sich die Tatsache nutzbar, dass eine Synchronisation der Kolbenbewegung von Lader und Motor vorhanden ist, so dass sich mit relativ einfachen Mitteln die gewünschte Anpassung dadurch ereichen lässt, dass man, ausgehend von einer bestimmten Phasenlage, den Laderkolben gegenüber dem Motorkolben entweder vor- oder nacheilen lässt.

Dem erfindungsgemässen Verfahren oder Motor ähnliche Verfahren bzw. Motoren sind Gegenstand weiterer Anmeldungen mit gleichem Zeitrang. So betrifft die EP-A-0 126 467 einen Motor mit mechanischem Lader, bei welchem die Phasenlage des Laders zu der des Motors veränderbar ist und die EP-A-0 126 463 ein Verfahren zum Einbringen der Ladeluft in die Zylinder eines Mehrzylinder-Verbrennungsmotors im Wege der Nachladung mit Hilfe eines Abgasladers, der durch die natürlichen Abgasimpulse angetrieben wird und die Luft aus dem Lader direkt in den Verbrennungsraum des Motors ausschiebt. Diese Luft wird bei überhöhtem Druck gekühlt und anschliessend auf den endgültigen Ladedruck entspannt.

Vorzugsweise wird der Entspannungsbeginn der Ladeluft im Motorbrennraum durch das Hubende des Laderkolbens bestimmt. Endet die Ausschubbewegung des Laders bereits, wenn der Motorkolben sich noch auf seinem unteren Totpunkt zubewegt, dann kann die Expansion der Ladeluft unabhängig von der Ventilsteuerung des Motors bewirkt werden, d.h., eine frühzeitige Schliessung des Einlassventils des Motorbrennraums kann entfallen.

Die beabsichtigte Wirkung kann noch weiter gesteigert werden, wenn ein Lader der Hubkolbenbauart verwendet wird und der Ladeluftauslass des Laders ventilfrei ist. Der Lader kann dann eine überschüssige Luftmenge zunächst in den Motorbrennraum drücken, welche nach Hubende des Laderkolbens in den Lader zurückströmt. Dies ermöglicht eine besonders hohe Übertragung positiver Ladungswechselarbeit und damit eine entsprechende Verringerung des Kraftstoffverbrauchs. Bei Ottomotoren lassen sich Leistungssteigerungen in der Grössenordnung von 30–40% erreichen, eingeschlossen der Leistungszugewinn durch die aufgrund des Laderbetriebs ermöglichte Ausspülung der Verbrennungsgase aus dem Motorbrennraum.

Durch den Wegfall eines Druckventils am Lader reduzieren sich nicht nur die Kosten, es verringern sich auch die Strömungsverluste und der für die Effizienz wichtige Totraum.

Bei abgasgetriebenen Ladern kann es vorteilhaft sein, die positive Ladungswechselarbeit zur Wirkungsgradverbesserung hoch anzusetzen, bis entsprechende Rückwirkungen im Verbrauch diesen Vorteil wieder ausgleichen. Die Optimierung dieser Vorgänge kann dadurch erreicht werden, dass bei abgasgetriebenen Verdrängerladern die Veränderung der Phasenlage der Bewegung von Laderkolben und Motorkolben durch eine regelbare Steuerung auf der Abgasseite des Laders bewirkt wird. Dabei ist es eine weitere zweckmässige Ausgestaltung, dass bei abgasgetriebenen Verdrängerladern der Vorauslassstoss der Abgase beim Öffnen der Auslassöffnung des Motorbrennraums direkt auf den Kolben des Verdrängerladers übertragen wird.

Die Entspannung kann in einer arbeitabgebenden Vorrichtung oder durch Verkürzung der Füllphase im Motorbrennraum stattfinden.

Eine weitere zweckmässige Ausgestaltung besteht darin, dass die Ladeluft beim Beginn des Ansaughubs mit überhöhtem Druck in den Motorbrennraum einströmt und dass dieser Druck bis zum Ende der Füllphase auf das der jeweiligen Füllmenge entsprechende Mass abgesenkt wird, was einen verbrauchsgünstigen Teillastbetrieb ermöglicht.

Zur Durchführung des erfindungsgemässen Verfahrens ist ein Verbrennungsmotor mit einem Verdrängerlader, der über einen Wärmetauscher für die Ladeluft unmittelbar mit der Lufteinlassöffnung des Motors verbunden ist und mit einer Vorrichtung zur Synchronisierung der Ausschubbewegung des bzw. der Kolben des Verdrängerladers mit der Kolbenbewegung des zu versorgenden Motorbrennraums derart ausgebildet ist, dass eine Vorrichtung zur Veränderung der Phasenlage zwischen der Bewegung des Motorkolbens und des Laderkolbens vorhanden ist.

Nach einer besonders zweckmässigen Ausgestaltung ist bei einem abgasgetriebenen Lader der Laderkolben mit einer Vorrichtung zur Rückstellung versehen und die Auslassöffnung des Motorbrennraums direkt mit dem Lader verbunden.

Bei mechanisch angetriebenen Ladern wird man wegen des Wirkungsgrades die Antriebsleistung so niedrig wie möglich halten wollen. Die erforderliche Optimierung durch die Veränderung der Phasenlage zwischen der Bewegung des Motorkolbens und des betroffenen Laderkolbens kann durch einen Riementrieb bewirkt werden, bei dem die Winkelstellung zwischen Antriebs- und Abtriebswelle veränderbar ist.

Vorzugsweise ist der Ladeluftauslass des Laders ventilfrei.

Anhand der nun folgenden Beschreibung der in der Zeichnung dargestellten Ausführungsbeispiele der Erfindung wird diese näher erläutert.

Es zeigt:

Fig. 1 eine schematische Darstellung einer ersten Bauform einer Verbrennungskraftmaschine zur Durchführung des Verfahrens,

Fig. 2 eine schematische Darstellung einer zweiten Bauform der Verbrennungskraftmaschine,

Fig. 3 eine Variante zur Ausführungsform nach Fig. 2 mit einem Entspanner,

Fig. 4 eine schematische Seitenansicht einer ersten Ausführungsform eines Bandtriebs zwischen Motorantrieb und Nockenwelle und

Fig. 5 eine zweite Ausführungsform des Bandtriebs.

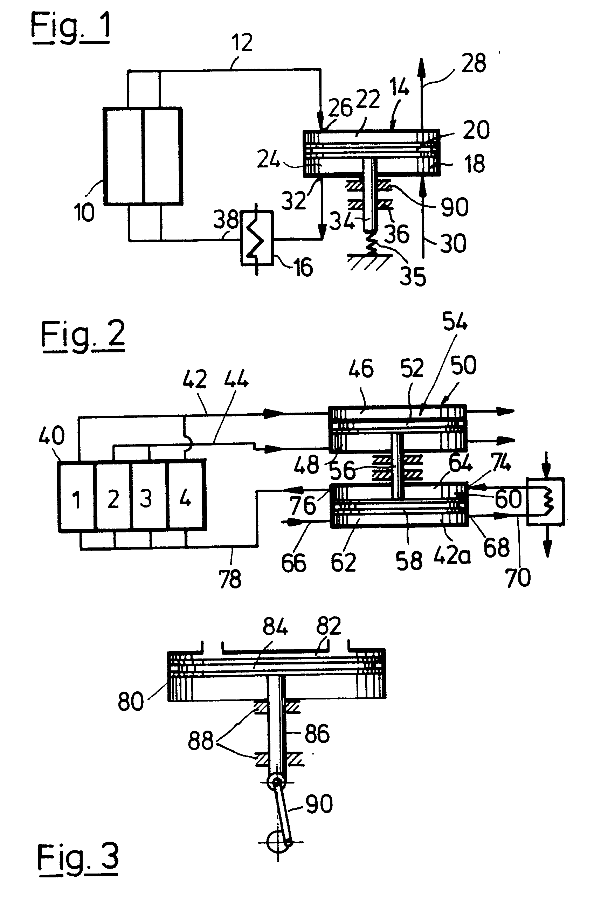

Ein insgesamt mit 10 bezeichneter, in Fig. 1 dargestellter Zweizylindermotor ist mit einem durch die über eine Abgasleitung 12 abgeführten Motorabgase betreibbaren Verdrängerlader 14 und einem Kühler 16 in Form eines Wärmetauschers für die Ladeluft versehen. Im Lader 14 ist in einer Laderkammer 18 eine Trennwand 20 beweglich angeordnet, die die Laderkammer 18 in eine Abgaskammer 22 und eine Ladeluftkammer 24 unterteilt. Die Abgaskammer 22 ist mit einem Abgaseinlass 26 versehen, an den die Abgasleitung 12 angeschlossen ist, sowie mit einem Abgasauslass 28. Die Ladeluftkammer 24 besitzt einen Ladelufteinlass 30 und einen Ladeluftauslass 32, die beide mit Rückschlagklappen versehen sein können.

Die Trennwand 20 ist mit einem Führungsschaft 34 versehen, der ausserhalb der Laderkammer 18 in einer Führung 36 längsverschieblich gelagert ist, so dass Dichtung und Führung der Trennwand 20 getrennt sind und die Reibungsverluste besonders gering gehalten werden können. Ausserdem wird dadurch die Schmierung und Wartung erleichtert.

Der Ladeluftauslass 32 steht über eine Leitung 38 mit den Einlässen der Motorzylinder bzw. -brennräume in Verbindung. In diese Leitung 38 ist der Kühler 16 einbezogen, so dass die im Lader 14 verdichtete und danach erwärmte Luft vor dem Eintritt in den jeweils zu ladenden Motorzylinder gekühlt wird.

Das Volumen der Ladeluftkammer 24 des Laders 14 ist so bemessen, dass der Luftbedarf eines Motorzylinders durch den Hub einer Laderkammer befriedigt werden kann.

Die Kolbenbewegung des Laders ist auf die Kolbenbewegung des Motors so abgestimmt, dass die Luftförderung bereits beendet ist, während der Motorkolben noch seinen Saughub durchführt. Dies führt dazu, dass sich die verdichtete und bereits abgekühlte Ladeluft bis zum unteren Totpunkt des Motorkolbens entspannt und dadurch weiter abkühlt. Die Anordnung ist dabei so getroffen, dass der Enddruck im Zylinder vor dem Beginn der Verdichtung etwa dem Atmosphärendruck entspricht. Die durch die Entspannung frei werdende Arbeit wird auf den Kolben und von diesem auf die Motorkurbelwelle übertragen.

Die Fig. 2 zeigt eine Variante, bei welcher die Entspannung der verdichteten Ladeluft ausserhalb des Motorzylinders bzw. -brennraums stattfindet. Gezeigt ist in Fig. 2 ein Vierzylindermotor 40. Da sich die Abgasimpulse von vier Zylindern soweit neutralisieren können, dass die Massenträgheit der Trennwand im Lader nicht mehr überwunden werden kann, sind hier die Ausgänge der Zylinder 1 und 4 zu einer Abgasleitung 42 und die Ausgänge der Zylinder 2 und 3 zu einer Abgasleitung 44 zusammengefasst, wobei jede Abgasleitung 42 und 44 in eine gesonderte Abgaskammer 46 bzw. 48 eines Verdrängerladers 50 führt. Diese Abgaskammern 46 und 48 befinden sich zu beiden Seiten einer Trennwand 52, die in einer ersten Laderkammer 54 beweglich ist. Die Trennwand 52 ist über einen Führungsschaft 56 fest verbunden, die in einer zweiten Laderkammer 60 angeordnet ist und diese in eine Ladeluftkammer 62 und eine Entspannerkammer 64 unterteilt. Die Ladeluftkammer 62 ist mit einem Ladelufteinlass 66 und einem Ladeluftauslass 68 versehen, die beide mit Rückschlagklappen ausgerüstet sind. Vom Ladeluftauslass 68 führt eine Leitung 70 über einen Kühler 72 in Form eines Wärmetauschers zum Einlass 74 der Entspannerkammer 64. Von deren Auslass führt eine weitere Leitung 78 zu den Einlässen der vier Zylinder 1 bis 4 des Motors 40.

Bei dieser Anordnung wird die Trennwand 52 durch die abwechselnd in den Abgaskammern 46 und 48 auftretenden Abgasimpulse auf- und abbewegt. An dieser Bewegung nimmt auch die Trennwand 58 teil, die beim Aufwärtshub eine Füllung der Ladeluftkammer 62 mit Ladeluft ermöglicht, diese beim Abwärtshub verdichtet und über den Kühler 72 zur Entspannerkammer 64 fördert. Die bereits abgekühlte Luft entspannt sich in der Entspannerkammer 64 und gibt dabei Arbeit frei, die den Lader 50 bei der Verdichtungsarbeit unterstützt. Die gekühlte und entspannte Luft gelangt dann über die Leitung 78 zum Motor 40, dessen Zylinder somit wie im Saugbetrieb mit Luft gefüllt werden, die bis auf den Atmosphärendruck entspannt ist. Die Entspannerkammer 64 ist zweckmässigerweise mit einer Steuerung von Lufteinlass und Luftauslass versehen.

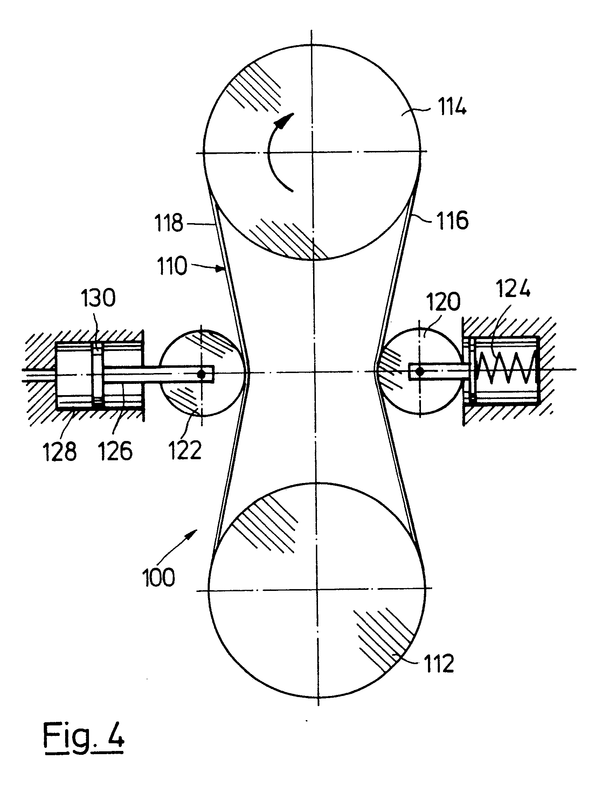

Anstelle der in den Lader 50 integrierten Entspannerkammer 64 kann auch eine gesonderte, in Fig. 4 gezeigte Entspannerkammer vorgesehen werden, die in einem mit 80 bezeichneten Entspanner ausgebildet ist. Der Entspanner 80 enthält in einer Entspannerkammer 82 eine bewegliche Trennwand 84, die mit einem Führungsschaft 86 versehen ist, der in einer Führung 88 längsbeweglich geführt und mit einem Pleuel 90 verbunden ist, das mit seinem anderen Ende mit der Motorkurbelwelle verbunden ist, so dass die Entspannungsarbeit direkt auf die Kurbelwelle übertragen werden kann. Die Entspannerkammer 82 ist zweckmässigerweise mit einer Steuerung von Lufteinlass und Luftauslass versehen.

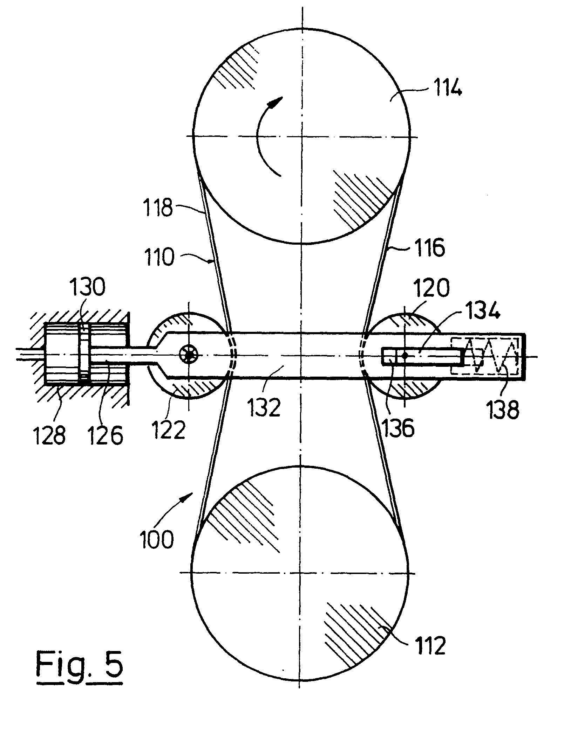

Um die in die Motorzylinder bzw. -brennraum beförderte Luftmenge entsprechend den Betriebsverhältnissen dem jeweiligen Bedarf anzupassen, wird die Einlassphase des Motors verändert, während der Öffnungswinkel konstant bleibt. Die Fig. 4 und 5 zeigen besonders vorteilhafte Lösungen zur Veränderung der Phasenlage zwischen Motorkurbelwelle und Nockenwelle mittels eines Bandtriebs 100. Es wird dabei davon ausgegangen, dass der Motor über Einlassventile verfügt, die über eine Nockenwelle gesteuert werden, die über einen Bandtrieb vom Motorabtrieb aus angetrieben werden.

In Fig. 4 ist ein Zahnriemen 110 über insgesamt vier Rollen geführt, nämlich eine dem Motorabtrieb entsprechende Antriebsrolle 114, eine mit der Nockenwelle verbundene Abtriebsrolle 112 und zwei weitere Rollen, nämlich eine bewegliche Rolle 120, die zwischen der Abtriebsrolle 112 und der Antriebsrolle 114 angeordnet ist, sowie über eine quer zur Bandlaufrichtung einstellbare Rolle 122, jeweils in Bandlaufrichtung gesehen, wobei die Rolle 122 – wie nachfolgend noch verständlich wird – zur Steuerung der Phasenlage zwischen Motorabtrieb und Nockenwelle benutzt wird. Wie ersichtlich, liegt die Rolle 120 am rücklaufenden Trum 116 und die Rolle 122 am antreibenden Trum 118 des Bandes 110 an. Diese Anordnung ist deshalb zweckmässig, weil die Rolle 120 durch eine Feder 124 gegen das Band 110 gedrückt wird, um die gewünschte Bandspannung aufrechtzuerhalten. Durch die Möglichkeit, dass sich die Rolle 120 etwas quer zur Bandrichtung bewegt, ohne dass dies durch eine Verstellung der Rolle veranlasst ist, würde die Anordnung der Rolle 120 im Bereich des antreibenden Trums gringfügige Längenveränderungen des antreibenden Trums in unkontrollierter Weise ermöglichen und damit eine Störung des absoluten Gleichlaufs von antreibender Rolle 114 und Abtriebsrolle 112.

Die Rolle 122 ist dagegen in ihrer ganzen Lage quer zur Laufrichtung des Bandes 110 genau einstellbar. Beim gezeigten Beispiel ist hierzu die Rolle 122 an einer Kolbenstange 126 gelagert, die mit einem in einem Zylinder 128 verschieblich angeordneten Kolben 130 verbunden ist, der beidseitig hydraulisch beaufschlagbar ist, d.h., es handelt sich beim Zylinder 128 mit dem Kolben 130 um einen doppeltwirkenden Hydraulikzylinder, durch den die Position der Rolle 122 genau einstellbar ist. Die hydraulische Betätigung ermöglicht eine einfache Regelung der Phasenlage des Bandtriebs in Abhängigkeit von extern ermittelten Parametern, nämlich den Betriebsdaten des Kraftfahrzeugs und seines Verbrennungsmotors, wenn der Bandtrieb nach dem in der Einleitung bereits geschilderten Beispiel zur Ventilsteuerung des Motors eingesetzt ist.

Wird die Rolle 122 in Fig. 4 nach rechts bewegt, verlängert sich das antreibende Trum 118, während sich das rücklaufende Trum 116 entsprechend verkürzt. Die Abtriebsrolle eilt dadurch der Antriebsrolle vor. Bewegt man die Rolle 122 in der Gegenrichtung, gelangt das antreibende Trum 118 allmählich in seine kürzeste, gestreckte Lage, welche man zweckmässig einer Nacheilung der Abtriebsrolle 112 gegenüber der Antriebswelle 114 zuordnet, während die Phasenverschiebung NULL etwa in der Mitte zwischen diesen beiden Stellungen der Rolle 122 vorgesehen werden sollte, wenn sowohl die Möglichkeit einer Voreilung als auch einer Nacheilung erwünscht ist. Die Anordnung ist bei beiden Ausführungsbeispielen jeweils so getroffen, dass in der einen Endstellung der einstellbaren Rolle 122 das eine Trum 116 oder 118 gesteckt verläuft und das jeweils andere Trum 118 oder 116 dann seine grösste Auslenkung aus der gestreckten Lage aufweist. Unter diesen Voraussetzungen sind Variationen in der Anordnung der Rollen 120 und 122 möglich. So könnte in Fig. 4 die Rolle 120 z. B. auf der anderen Bandseite angeordnet sein, müsste dann aber das Trum 116 statt nach links nach rechts aus der gestreckten Stellung drücken. Bei der Anordnung nach Fig. 4 muss die Feder 124 die Stellbewegung der Rolle 122 ausgleichen. Bei der Ausführungsform nach Fig. 5 ist dies nicht nötig, es kann dort also eine kleinere, härtere Feder verwendet werden.

Bei der Ausführungsform nach Fig. 5 ist mit der Kolbenstange 126 ein Lagerelement 132 verbunden, in dem die Rolle 122 fest gelagert ist. Die Rolle 120 ist in einem Schieber 134 gelagert, der im Lagerelement 132 quer zur Laufrichtung des Bandes 110 begrenzt beweglich ist, wozu Führungsschlitze 136 zur Aufnahme des Schiebers 134 dienen können. Der Schieber 134 ist am Lagerelement 132 über eine Feder 138 abgestützt. Diese Feder übernimmt im wesentlichen die Aufgabe, das Band 110 unter der gewünschten Spannung zu halten.

Wird der Kolben 130 bewegt, nehmen die Rollen 120 und 122 an dieser Bewegung teil. Da beide Rollen 120 und 122 an der gleichen Fläche des Bandes 110 anliegen, wird das eine Trum 116 um annähernd das gleiche Mass kürzer, um das das andere Trum 118 sich verkürzt oder umgekehrt. Geringe Abweichungen, die mit dem Verlassen einer symmetrischen Position beider Trums 116 und 188 auftreten, können von der Feder 138 ausgeglichen werden.

Die Wirkungsweise wäre gleich, wenn beide Rollen 120 und 122 auf der jeweils anderen Bandseite angeordnet wären. Es müsste nur die Anordnung so getroffen sein, wie dies am Ende der Beschreibung der Fig. 4 erläutert ist. Unter dieser Voraussetzung, dass nämlich in der einen Endstellung das eine Trum gestreckt, das andere dagegen maximal ausgelenkt ist und umgekehrt, könnte man mit den gleichen Vorteilen hinsichtlich der Dimensionierung der Feder 138 die Rolle 120 auch mittels des Schiebers 134 in einem zur Kolbenstange 126 und der an dieser gelagerten Rolle 122 zwangsweise gegenläufig bewegten Lagerelement anordnen, wenn dies auch insgesamt wegen der aufwendigeren Konstruktion nicht sehr zweckmässig erscheinen mag. Es zeigt dies aber, dass der Grundgedanke der Erfindung auf sehr verschiedene Weise verwirklicht werden kann und nicht auf die erläuterten Beispiele beschränkt ist.

Um die Bandspannung justieren zu können, wird vorzugsweise die Kraft der Feder 124 bzw. 138 einstellbar sein, wie dies bei Bandtrieben an sich bekannt ist.

## Patentansprüche

1. Verfahren zur Zufuhr von Ladeluft in den Brennraum einer Verbrennungskraftmaschine der Verdrängerbauart, insbesondere eines Hubkolbenmotors, mit Vorverdichtung der Ladeluft durch einen Verdrängerlader mit mindestens einem Laderkolben vor dem Schliessen der Einlassöffnung des Motorbrennraums, wobei die Ladeluft nach der Vorverdichtung so weit entspannt wird, dass sich im Motorbrennraum bei Beginn des Verdichtungshubs durch den Motorkolben höchstens etwa Umgebungsdruck einstellt, wobei die Ladeluft vor dieser Entspannung durch eine Kühlvorrichtung gekühlt wird, wobei ferner die Ausschubbewegung des Kolbens bzw. der Kolben des Verdrängerladers mit der Kolbenbewegung der zu versorgenden Motorbrennräume derart synchronisiert ist, dass die aus dem Lader verdrängte Luft direkt in den betroffenen Motorbrennraum überströmt, dadurch gekennzeichnet, dass die Festlegung des Entspannungsbeginns bei geöffneter Einlassöffnung durch die Veränderung der Phasenlage zwischen der Bewegung des Motorkolbens und des Laderkolbens bewirkt wird.

2. Verfahren nach Anspruch 1, dadurch gekennzeichnet, dass die Entspannung der Ladeluft im Motorbrennraum stattfindet und der Entspannungsbeginn durch das Hubende des Laderkolbens bestimmt wird.

3. Verfahren nach Anspruch 1, dadurch gekennzeichnet, dass ein Teil der Luft im Motorbrennraum nach Hubende des Laderkolbens in den Lader zurückströmt.

4. Verfahren nach einem der Ansprüche 1 bis 3, dadurch gekennzeichnet, dass bei abgasgetriebenen Verdrängerladern die Veränderung der Phasenlage der Bewegung von Laderkolben und Motorkolben durch eine regelbare Steuerung auf der Abgasseite des Laders bewirkt wird.

5. Verfahren nach einem der Ansprüche 1 bis 4, dadurch gekennzeichnet, dass bei abgasgetriebenen Verdrängerladern der Vorauslassstoss der Abgase beim Öffnen der Auslassöffnung des Motorbrennraums direkt auf den Kolben des Verdrängerladers übertragen wird.

6. Verfahren nach einem der Ansprüche 1 bis 5, dadurch gekennzeichnet dass die Ladeluft beim Beginn des Ansaughubs mit überhöhtem Druck in den Motorzylinder einströmt und dass dieser Druck bis zum Ende der Füllphase auf das der jeweiligen Füllmenge entsprechende Mass abgesenkt wird.

7. Verbrennungsmotor zur Durchführung des Verfahrens nach Anspruch 1, mit einem Verdrängerlader, der über einen Wärmetauscher für die Ladeluft unmittelbar mit der Einlassöffnung des Motors verbunden ist und mit einer Vorrichtung zur Synchronisierung der Ausschubbewegung des bzw. der Kolben des Verdrängerladers mit der Kolbenbewegung des zu versorgenden Motorbrennraums, dadurch gekennzeichnet, dass eine Vorrichtung zur Veränderung der Phasenlage zwischen der Bewegung des Motorkolbens und des Laderkolbens vorhanden ist.

8. Verbrennungsmotor nach Anspruch 7, dadurch gekennzeichnet, dass bei einem abgasgetriebenen Lader der Laderkolben mit einer Vorrichtung zur Rückstellung (35) versehen ist und die Auslassöffnung des Motorbrennraums direkt mit dem Lader verbunden ist.

9. Verbrennungsmotor nach einem der Ansprüche 7 oder 8, dadurch gekennzeichnet, dass der Ladeluftauslass (32) des Laders (14) ventilfrei ist.

10. Verbrennungsmotor nach einem der Ansprüche 7 oder 9, dadurch gekennzeichnet, dass bei mechanisch angetriebenen Verdrängerladern zur Veränderung der Phasenlage zwischen der Bewegung des Motorkolbens und des betroffenen Laderkolbens ein Riementrieb vorgesehen ist, bei dem die Winkelstellung zwischen Antriebs- und Abtriebswelle veränderbar ist.

**Claims**

1. A method for the supply of combustion air to the combustion chamber of an internal combustion engine of the displacement type, and more especially the combustion chamber of a reciprocating piston engine, with precompression of the air charged by a displacement charger with at least one charger piston prior to closing the inlet port of the engine combustion chamber, in the case of which the air charged, after the precompression, is expanded in such an extent that at the commencement of the displacement stroke of the engine piston the pressure in the engine combustion chamber is at the most only equal to the pressure of the surrounding air, and in the case of which prior to such expansion the air charged is cooled by a cooling device and furthermore the expulsion motion of the piston or the pistons of the displacement charger is so synchronized with the piston motion of the engine combustion chambers to be supplied that the air displaced from the charger transfers directly into the engine combustion chamber in question, characterized in that the timing of the commencement of the expansion with the inlet port open is brought about by altering the phase relationsship between the motion of the engine piston and of the charger piston.

2. The method as claimed in claim 1 characterized in that the expansion of the combustion air takes place in the engine combustion chamber and the commencement of expansion is determined by the end of the stroke of the charger piston.

3. The method as claimed in claim 1 characterized in that a part of the air in the engine combustion chamber flows back into the charger after the end of the stroke of the charger piston.

4. The method as claimed in any one of the claims 1 through 3 characterized in that in the case of exhaust gas driven displacement chargers the alteration of the phase relationship of the motion of the charger piston and of the engine piston is brought about by an adjustable controller on the exhaust gas side of the charger.

5. The method as claimed in any one of the claims 1 through 4 characterized in that in the case of exhaust gas driven displacement chargers the preexit pulse of the exhaust gases on opening of the outlet port of the engine combustion chamber is directly transmitted to the piston of the displacement charger.

6. The method as claimed in any one of the claims 1 through 5 characterized in that the combustion air flows at an increased pressure into the engine cylinder at the commencement of the induction stroke and that this pressure is lowered by the end of the filling phase to the value corresponding to the respective quantity to be filled.

7. An internal combustion engine adapted for performing the method as claimed in claim 1 comprising a displacement charger, which is connected with the inlet part of the engine via a heat exchanger for the charged air directly and is connected with a device for synchronizing the expulsion motion of the piston or pistons, respectively, of the displacement charger with the piston motion of the engine chamber to be supplied, characterized by a device for altering the phase relationship between the motion of the engine piston and the charger piston.

8. The internal combustion engine as claimed in claim 7 characterized in that in the case of an exhaust gas driven charger the charger piston is provided with a resetting device (35) and the outlet port of the engine combustion chamber is connected directly with the charger.

9. The combustion engine as claimed in claim 7 or claim 8 characterized in that the charged air outlet port (14) of the charger (32) does not have a valve.

10. The internal combustion engine as claimed in any one of claims 7 and 9 characterized in that in the case of a mechanically driven displacement charger a belt drive is provided for altering the phase relationship between the motion of the engine piston and the respective charger piston and in the belt drive the angular setting between the input drive shaft and the output drive shaft may be altered.

**Revendications**

1. Procédé pour amener de l'air d'alimentation dans la chambre de combustion d'un moteur à combustion interne de type à déplacement positif, en particulier d'un moteur à piston, avec précompression de l'air d'alimentation, avant fermeture de l'orifice d'admission de la chambre de combustion du moteur, à l'aide d'un compresseur à déplacement positif, avec au moins un piston de compresseur, l'air d'alimentation étant, après cette précompression, détendu d'une façon telle que, dans la chambre de combustion du moteur, après le début de la course de compression par le piston du moteur, s'installe, au plus, sensiblement la pression environnante, l'air d'alimentation étant préalablement refroidi avant cette détente par un dispositif de refroidissement, et, de plus, le mouvement d'éjection du ou des pistons du compresseur à déplacement positif étant synchronisé avec le mouvement des pistons de la chambre de combustion du moteur à alimenter, de telle façon que l'air refoulé par le compresseur s'engouffre directement dans la chambre de combustion concernée du moteur, caractérisé en ce que la détermination du début de la détente, avec l'orifice d'admission ouvert, est effectuée à partir du déphasage entre le mouvement du piston du moteur et celui du piston du compresseur.

2. Procédé suivant la revendication 1, caractérisé en ce que la détente de l'air d'alimentation se produit dans la chambre de combustion du moteur et en ce que le commencement de la détente est déterminé par la fin de la course du piston du compresseur.

3. Procédé suivant la revendication 1, caractérisé en ce qu'une partie de l'air de la chambre de combustion du moteur refoule dans le compresseur après la fin de la course du piston du compresseur.

4. Procédé suivant l'une quelconque des revendications 1 à 3, caractérisé en ce que, dans le cas de compresseurs à déplacement positif entrainés par les gaz d'échappement, le déphasage entre le mouvement du piston du compresseur et celui du piston du moteur est mis en œuvre au moyen d'une commande réglable sur le côté gaz d'echappement du compresseur.

5. Procédé suivant l'une quelconque des revendications 1 à 4, caractérisé en ce que, dans le cas de compresseur à déplacement positif entrainés par les gaz d'échappement, le choc initial des gaz d'échappement au moment de l'ouverture de l'orifice d'échappement de la chambre de combustion du moteur est reporté directement sur le piston du compresseur à déplacement positif.

6. Procédé suivant l'une quelconque des revendications 1 à 5, caractérisé en ce que l'air d'alimentation, au début de la course d'aspiration, s'introduit avec une pression augmentée dans le cylindre du moteur et en ce que cette pression s'abaisse, jusqu'à la fin de la phase de remplissage, jusqu'à la valeur correspondant à cette quantité de remplissage.

7. Moteur à combustion interne pour la mise en œuvre du procédé suivant la revendications 1, comportant un compresseur à déplacement positif qui, par l'intermédiaire d'un échangeur de chaleur pour l'air d'alimentation, est relié directement avec l'orifice d'admission du moteur, et un dispositif de synchronisation du mouvement d'éjection du piston ou des pistons du compresseur à déplacement positif avec le mouvement des pistons de la chambre de combustion du moteur à alimenter, caractérisé en ce qu'il comprend un dispositif pour faire varier le déphasage entre le mouvement du piston du moteur et celui du piston de l'alimentateur.

8. Moteur à combustion interne suivant la revendication 7, caractérisé en ce que, dans le cas d'un compresseur entrainé par les gaz d'échappement, le piston du compresseur est prévu avec un dispositif de retour (35) et en ce que l'orifice d'échappement de la chambre de combustion du moteur est raccordé directement au compresseur.

9. Moteur à combustion interne suivant l'une des revendications 7 ou 8, caractérisé en ce que l'échappement d'air d'alimentation (32) du compresseur (14) est sans soupape.

10. Moteur à combustion interne suivant l'une des revendications 7 ou 8, caractérisé en ce que, dans le cas de compresseurs à déplacement positif entrainés mécaniquement, on prévoit, pour le déphasage entre le mouvement du piston du moteur et celui du piston du compresseur concerné, un entrainement par courroie dont on peut faire varier la position angulaire entre l'arbre menant et l'arbre mené.

Fig. 1

Fig. 2

Fig. 3

Fig. 4

Fig. 5